# EUROPEAN PATENT SPECIFICATION

(11) **EP 2 839 728 B1**
(45) Date of publication and mention of the grant of the patent: **24.10.2018**
(21) Application number: 13181071.5
(22) Date of filing: 20.08.2013
(51) Int. Cl.: A01D 34/82

(54) **Vehicle, such as wheeled gardening equipment**
Fahrzeug, wie beispielsweise Gartengerät mit Rädern
Véhicule, tel qu'un équipement de jardinage à roues

(43) Date of publication of application: 25.02.2015
(73) Proprietor: Robert Bosch GmbH, 70442 Stuttgart (DE)
(72) Inventor: Sanderson, Alastair, Highwoods Colchester (GB); Reynolds, Dave, Bury St. Edmunds (GB); Tonks, Philip, Stowmarket (GB)

(56) References cited:
- EP-A2- 1 902 608
- US-A- 2 757 013
- US-A- 2 966 365
- US-A- 3 246 909
- US-A- 3 764 156
- US-A- 5 636 504

## Description

### Prior Art

The present invention relates to a vehicle, such as wheeled gardening equipment.

US 3,246,909 discloses a lawn mower as a vehicle, such as wheeled gardening equipment, comprising a handle for pushing or pulling the vehicle, wherein the handle comprises at least one tube with a mounting portion, and a housing with a mounting seat to which the mounting portion of the tube is attached with at least one connector, wherein the connector is a pin. The connector also holds a mounting seat in which the mounting portion of the tube is arranged and the housing has a mounting seat in which a mounting portion of the connector is arranged.

US 5,163,275 discloses a lawn mower as a vehicle, such as wheeled gardening equipment, comprising a handle for pushing or pulling the vehicle, wherein the handle comprises at least one tube with a mounting portion, and wherein the vehicle comprises a housing with a mounting seat to which the mounting portion of the tube is attached with at least one connector. The connector is a pin which also enables pivoting of the handle.

There are also so-called quick-fit handles that are attached as disclosed in GB 1 577 924. But they cannot be removed without causing damage once they are attached to the housing.

There are also handles which are attached to the housing with screws. This requires a screwdriver and takes at least two minutes to fit and remove the handles. A user hast to bend down to the ground or lift the product onto a bench to fit the handles. It also requires high strength to screw self-tapping screw into metal tubes. Accurate alignment of the hole in the handle tube and the hole in the housing is necessary. There is a risk of a user not fitting the screws either by accident or by choice. It is also unlikely that a user will remove the handles for more compact storage in the winter.

It is an object of the invention to improve the mounting and removal of the handle.

### Disclosure of the Invention

### Advantages of the Invention

In accordance with the invention, there is provided a vehicle, such as wheeled gardening equipment, comprising a handle for pushing or pulling the vehicle, wherein the handle comprises at least one tube with a mounting portion, and wherein the vehicle comprises a housing with a mounting seat to which the mounting portion is attached with at least one connector, wherein the connector has a mounting seat in which the mounting portion of the tube is attached and the housing has a mounting seat in which a mounting portion of the connector is arranged, and wherein the mounting seat of the housing is formed as a sliding seat, preferably substantially vertical sliding seat, for the mounting portion of the connector.

This solution provides a mechanism that allows a user to fit the tubes of a handle by simply aligning them and pushing them into place. It allows for an assembly that can be self-aligning. It also allows for a modular design. The handle can be fitted while standing. The handle can further be fitted or even removed in about ten seconds or even less.

The surfaces of the connector and the housing that are in contact are increased and therefore the contact pressure per surface area reduced.

In a preferred embodiment, the mounting seat of the housing has at least one opening in an external top surface of the vehicle through which the connector is moved into the mounting seat. This assists in the assembly of the handle to the housing.

In a preferred embodiment, the sliding seat of the housing has at least one opening in an external side surface of the vehicle. This makes it easier to recognise the mounting position of the handle.

In a preferred embodiment, an external surface of the connector is at least generally flush with a neighbouring external surface of the housing or an external surface of the connector is at least generally flush with a neighbouring external surface of the housing except for a bushing section for accommodating the tube. This reduces the risk of injury.

In a preferred embodiment, the connector and the handle are a preassembled subassembly. Thus, they can get assembled in a factory which makes it yet easier for a user to finally assemble the handles and the housing. Preferably, the connector and the handle are removably attached to the housing. This gives a user the possibility to remove the handles e.g. when storing or shipping the vehicle.

In a preferred embodiment, the mounting portion of the tube is arranged between the external side surface of the vehicle and a locating portion of the connector, wherein the locating portion is arranged in a recess portion of the housing. This provides greater stability.

In a preferred embodiment, the tube extends beyond the mounting seat of the connector and is attached to at least one further bearing section of the housing. This gives more mechanical strength to the connection.

In a preferred embodiment, the connector comprises a lock element on an internal surface for securing the connector and the handle to the housing. This prevents the lock element from being blocked by debris such as grass and/or dust. When the connector comprises a lock element on an internal surface for securing the connector and the handle to the housing, wherein the lock element is movable from a locked position locking the connector to the housing to an unlocked position, this additionally permits that the connector and the handle can repeatedly be removed from the housing and mounted back.

In a preferred embodiment, the connector comprises a lock bearing section for holding the lock element. This prevents the movement of the lock element being blocked.

In a preferred embodiment, the lock element has a button portion and the connector has an opening in its external surface for the button portion, so that the lock element can be operated without tools and/or a lock element is spring-loaded towards a locked position. This makes assembly and disassembly easier for a user.

In a preferred embodiment, the lock element has at least one latch element which engages with a corresponding locking surface of the mounting seat of the housing when in the locked position. This enables a safe connection.

In a preferred embodiment, the latch element has a ramp for pressing the lock element towards the unlocked position when the connector is inserted into the mounting seat of the housing. This makes assembly easier.

In a preferred embodiment, the handle is secured in a mounting direction by the connector, in particular a lock element, and against lateral movement with respect to the mounting direction primarily or completely by a bearing section of the housing. This is possible because the weight range of the vehicle which rests on the connector is known. The possible loads when the vehicle is pushed and pulled can be higher and are rather undefined (e.g. impacts of the vehicle with solid objects). These loads are better dealt with when the tubes are held by the bearing sections.

In a preferred embodiment, the vehicle comprises two mounting seats and a handle with a pair of tubes and a pair of connectors, so that a tube, a connector and a mounting seat are arranged on each side of the vehicle and a simultaneous removal of the connectors and the handle is enabled, wherein preferably the tubes can be held with the thumbs and a release button be pushed with at least one of the remaining fingers. This allows an easy assembly and also disassembly of the handle and the housing.

In a preferred embodiment, the mounting seat of the connector is a bushing. This holds the components together safely.

### Drawings

Two embodiments of the invention will now be described by way of example only and with reference to the accompanying drawings, in which:
- Fig. 1a: shows as a first embodiment of the invention a first lawnmower,
- Fig. 1b: shows as a second embodiment of the invention second lawnmower,
- Fig. 2a: is an exploded view of circled area Ila in Fig. 1a,
- Fig. 2b: is an exploded view of circled area IIb in Fig. 1b,
- Fig. 3a: is a view from the other side of Fig. 2a,
- Fig. 3b: is a view from the other side of Fig. 2b,
- Fig. 4a: shows a first tube and a first connector in an assembled position,
- Fig. 4b: shows a second tube and a second connector in an assembled position,
- Fig. 5a: shows the first tube and connector inserted in a housing of the first lawnmower and
- Fig. 5b: shows the second tube and connector inserted in a housing of the second lawnmower.

### Description

There are two embodiments shown in the Figures. The first embodiment is shown in the Figures ending with "a". The second embodiment is shown in the Figures ending with "b". Reference numerals of the first embodiment suffix end with "a". Reference numerals of the second embodiment suffix end with "b". The use of the suffix "a" or "b" also indicates that comparable parts can be found in the first and second embodiments. When no suffix "a" or "b" is used it indicates that the part is unique to one embodiment.

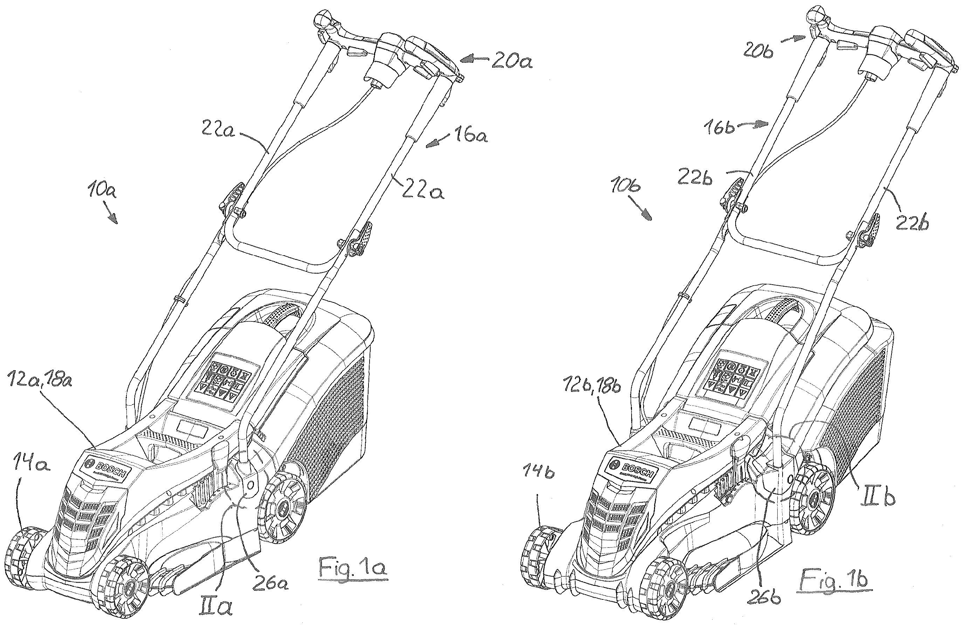

Fig. 1a and 1b show lawn mowers as embodiments of vehicles 10a and 10b respectively. Alternative vehicles 10a, 10b can be other wheeled gardening equipment such as brush cutters, lawn trimmers, lawn rakers but also pressure washers and vacuum cleaners. The vehicles 10a, 10b can be used to cut vegetation such as brush but also to trim or mow lawn but also to clean floors.

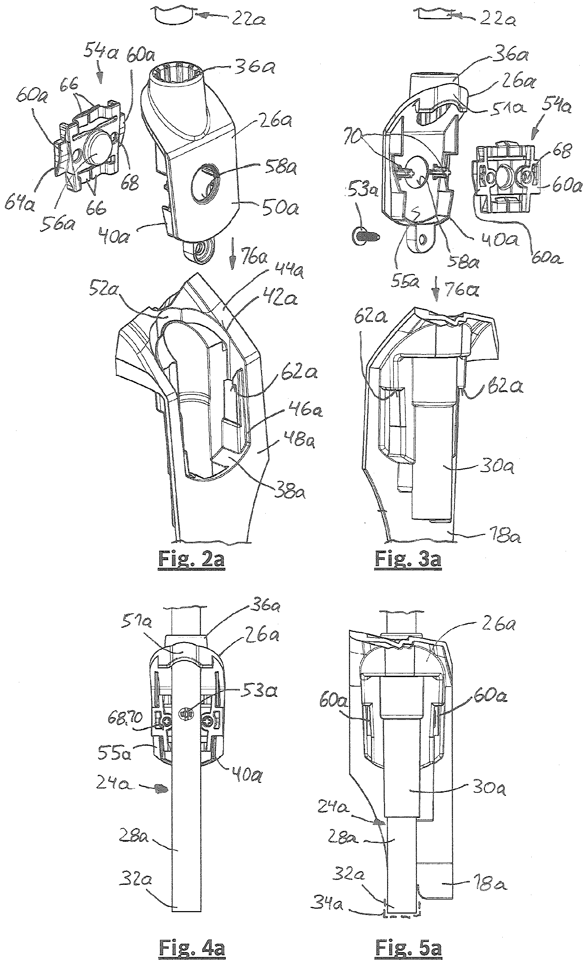

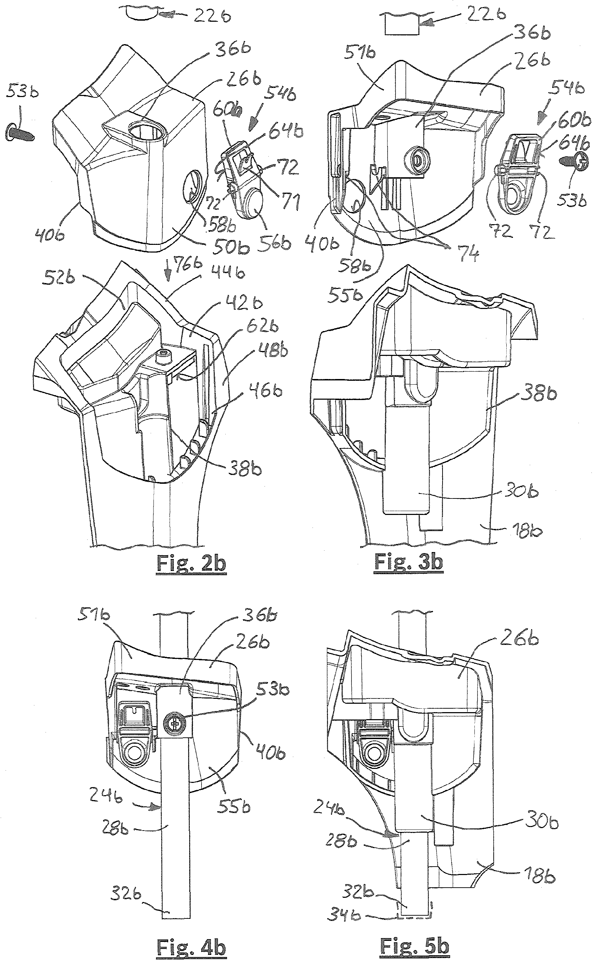

The vehicles 10a, 10b comprise main bodies or chassis 12a, 12b. The chassis 12a, 12b shown in Fig. 1a and 1b are mower decks. The chassis 12a, 12b comprise wheels 14a, 14b which - at least while the vehicles 12a, 12b are in operation - contact with the surface to be treated. Instead of wheels 12 there can also be balls or gliders or other implements to support the chassis 12. But the chassis 12 can also be supported by a cushion of air such as known from so-called hover mowers.
The vehicles 10a, 10b can be pushed or pulled by a person with handles 16a, 16b that are attached to the housings 18a, 18b of the chassis 12a, 12b. The housings 18a, 18b are made from plastic. But other materials can also be used. Plastic however is preferred due to its weight. The handles 16a, 16b are U-shaped with a central grip section 20a, 20b to be held by a person using the vehicles 10a, 10b. The handles 16a, 16b each comprise a pair of tubes 22a, 22b generally arranged in parallel. It should be noted that it is also possible to use just a single tube 22a, 22b. But the use of two tubes 22a, 22b is preferred. Also, in the embodiments shown the cross section of the tubes 22a, 22b is round and hollow. But the cross section can also be different such as polygonal or oval for example. The tubes 22a, 22b are made from metal. But other materials can also be used.
Referring now to Fig. 2a to 5a as well as 2b to 5b, each tube 22a, 22b has a mounting portion 24a, 24b provided at the end of the tube 22a, 22b which is pointing away from the grip section 20a, 20b. The mounting portion 24a, 24b is on the outer circumference of the tube 22a, 22b. Each mounting portion 24a, 24b is fitted with a connector 26a, 26b. The connectors 26a, 26b are made from plastic. Other materials are possible, too. But plastic is preferred due to its weight. The connectors 26a, 26b are attached to mounting seats 38a, 38b of the housings 18a, 18b.
Each mounting portion 24a, 24b extends beyond the connectors 26a, 26b with a pole portion 28a, 28b. The pole portions 28a, 28b are held by corresponding first bearing sections 30a, 30b of the housing 18a, 18b. The end portion 32a, 32b of the pole portion 28a, 28b and therefore of the tubes 22a, 22b are also held by second bearing sections 34a, 34b of the housing 18a, 18b. The second bearing sections 34a, 34b are hinted at in dashed lines in Fig. 5a, 5b. They also serve to abut the end portions 32a, 32b.

There can also be just the first bearing sections 30a, 30b or second bearing sections 34a, 34b. The first sections 30a, 30b and second bearing sections 34a, 34b respectively can be formed as one single bearing. It is also possible that there are no pole portions 28a, 28b as well as bearings 30a, 30b, 34a, 34b and it is just the connectors 26a, 26b that are used to attach the handle 16a, 16b to the housing 18a, 18b. But the pole portions 28a, 28b and bearings 30a, 30b as well as 34a, 34b increase the mechanical strength of the connection.

The mounting seat 36a, 36b of the connector 26a, 26b and the bearing sections 30a, 30b, 34a, 34b of the housing 18a, 18b are aligned, preferably co-axially aligned.

Each connector 26a, 26b has a mounting seat 36a, 36b in which the mounting portion 24a, 24b of the tube 22a, 22b is attached. It is noted that the pole portion 28a, 28b extends at least beyond the mounting seat 36a, 36b or also as mentioned above beyond the entire connector 26a, 26b. The mounting seat 36a, 36b has an inner circumference for the outer circumference of the mounting portion 24a, 24b of the tube 16a, 16b. The mounting seat 36a, 36b of the connector 26a, 26b is preferably a bushing. It completely surrounds the mounting portion 24a, 24b of the tube 22a, 22b. But it could also be open on the side so that the connector 26a, 26b can be mounted to the mounting portion 24a, 24b from a side and clipped onto it. The bushing however is preferred for mechanical stiffness.

As mentioned above, the housing 18a, 18b has the mounting seat 38a, 38b in which a mounting portion 40a, 40b of the connector 26a, 26b is arranged. The mounting seat 38a, 38b of the housing 18a, 18b is formed as a sliding seat for the mounting portion 40a, 40b of the connector 26a, 26b. The mounting seat 38a, 38b is preferably substantially arranged as a vertical sliding seat which means that when the vehicle 10a, 10b is put on the ground or floor the connector 26a, 26b can be mounted to or inserted into the mounting seat 28a, 28b with a substantially vertical movement of a user. However, the mounting seat 28a, 28b can be arranged so that the insertion occurs from a different angle. Although the mounting seat 38a, 38b can be shaped for a pivoting movement of the connector 26a, 26b to be inserted it is preferred if the mounting seat 38a, 38b is a linear sliding seat.

The mounting seat 38a, 38b of the housing has at least one opening 42a, 42b in an external top surface 44a, 44b of the vehicle 10a, 10b through which the connector 26a, 26b is moved into the mounting seat 28a, 28b of the housing 18a, 18b. The mounting seat 38a, 38b of the housing 18a, 18b has at least one opening 46a, 46b in an external side surface 48a, 48b of the vehicle 10a, 10b. The opening 42a, 42b in the top surface 44a, 44b would be sufficient. But the additional opening 46a, 46b in the side surface 28a, 48b is preferred for its better visibility for a user. It also reduces the number of tolerances to be considered.

The external surface 50a, 50b of the connector 26a, 26b is at least generally flush with a neighbouring external surface 44a, 44b, 48a, 48b of the housing 18a, 18b except for the bushing section of the mounting seat 36a, 36b for accommodating the tube 22a, 22b. But the external surface 50a, 50b of the connector 26a, 26b can also at least generally be flush with a neighbouring external surface 44a, 44b, 48a, 48b of the housing 18a, 18b if there is no bushing section standing out of the surface 50a, 50b of the connector 26a, 26b.

The connector 26a, 26b has at least one locating portion 51a, 51b and the mounting seat 38a, 38b of the housing 18a, 18b has at least one corresponding recess portion 52a, 52b for accommodating the locating portion of the connector 26a, 26b. The locating portion 51a, 51b is protruding away from the mounting portion 24a, 24b of the tubes 22a, 22b. Other geometries are possible. The distance of the contact portion 51a, 51b of the connector 26a, 26b to a longitudinal axis of the mounting portion 24a, 24b of the tube 22a, 22b is equal or slightly smaller than the distance of the recess portion 52a, 52b of the mounting seat 38a, 38b to a longitudinal axis of the first bearing section 30a, 30b of the housing 18a, 18b. When the mounting portion 24a, 24b is inserted into the mounting seat 38a, 38b the locating portion 51a, 51b contacts or almost contacts the recess portion 52a, 52b. This reduces or even eliminates lateral movement between the connector 26a, 26b and the housing 18a, 18b, especially in case that the seat of the tube 22a, 22b in the bearing sections 30a, 30b, 34a, 34b wears out over time. Therefore, mounting portion 24a, 24b of the tube 22a, 22b is located between the external side surface 48a, 48b of the housing 18a, 18b and the locating portion 51a, 51b or recess portion 52a, 52b of the housing, respectively.

The connector 26a, 26b is attached to the mounting portion 24a, 24b with a screw 53a, 53b. The parts could also be welded or glued or have a snap-fit.

The connector 26a, 26b further comprises a lock element 54a, 54b for securing the connector 26a, 26b and the handle 16a, 16b to the housing 18a, 18b. The lock element 54a, 54b is arranged on an internal surface 55a, 55b (compared to the external surface 50a, 50b) of the connector 26a, 26b. The lock element 54a, 54b is movable from a locked position locking the connector 26a, 26b to the housing 18a, 18b to an unlocked position so that the connector 26a, 26b and the handle 16a, 16b can be removed from the housing 18a, 18b. It is also possible that the lock element 54a, 54b can only move into the locked position while the connector 26a, 26b is inserted into the mounting seat 28a, 28b of the housing 18a, 18b.

The lock element 54a, 54b has a button portion 56a, 56b and the connector 26a, 26b has an opening 58a, 58b in its external surface 50a, 50b for the button portion 56a, 56b, so that the lock element 54a, 54b can be operated without tools. Alternatively or in addition the lock element 54a, 54b is spring-loaded towards the locked position.

The lock element 54a, 54b has at least one latch element 60a, 60b which engages with a corresponding locking surface 62a, 62b of the mounting seat 38a, 38b of the housing 18a, 18b when in the locked position. The at least one latch element 60a, 60b has a ramp 64a, 64b for pressing the lock element 54a, 54b towards the unlocked position when the connector 26a, 26b is inserted into the mounting seat 38a, 38b of the housing 18a, 18b.

Differences between the two embodiments are now described in more detail.

Referring now to Fig. 2a to 5a, the lock element 54a has two latch elements 60a on either side of the button portion 56a. Two pairs of spring elements 66 are arranged on the lock element 54a. One pair 66 is arranged above and one pair 66 is arranged below the button portion 56a. Between each latch element 60a and the button portion 56a there is a hole 68 resulting in two holes 68. On the inside of the connector 26a there are - as a lock bearing section - two mounting posts 70 for the holes 68 of the connector 26a. The mounting posts 70 are located below the mounting seat 36a of the connector 26a. The mounting posts 70 are located on either side of the tube 22a. When assembled the lock element is arranged between a wall of the connector 26a and the tube 22a. The pairs of spring elements 66 abut on the tube 22a. Instead of pairs of spring elements 66 there can also be different spring elements.

Referring now to Fig. 2b to 5b, the lock element 54b has one latch element 60b. The latch element 60b and the button portion 56b are arranged at a flat angle. In the latch element 60b there is a leaf spring element 71 arranged on the same side as the button portion 56b. The spring 71 abuts against a wall of the connector 26b. Between the button portion 56b and the latch element 60b there are two pivot pins 72 pointing away from the lock element 54b. The pivot pins 72 are mounted to pivot pin seats 74, which are another form of a lock bearing section and which are located on the inside of the connector 26b. The pivot pin seats 74 are arranged on one side of the mounted tube 22b. Instead of a leaf spring element 72 there could also be different spring elements.

Referring back to Fig. 2a to 5a and 2b and 5b, for assembling the parts, the connector 26a, 26b is fitted with the lock element 54a, 54b. Then the tube 22a, 22b is inserted with its mounting portion 24a, 24b in a mounting direction 76a, 76b which is parallel to the mounting portion 24a, 24b. Then the components are secured with a screw 53a, 53b. The handle 16a, 16b with its tube or pair of tubes 22a, 22b and the connector or connectors 26a, 26b are a preassembled subassembly easy to be mounted to the housing 18a, 18b by a user. For final assembly of the handle 16a, 16b to the housing 18a, 18b, which can be done by a user, the connectors 26a, 26b are slid into the mounting seats 38a, 38b of the housing in the same direction as the mounting direction 76a, 76b. When the latch elements 60a, 60b pass the locking surfaces 62a, 62b they get pushed into the unlocked position by the ramps 64a, 64b in a direction away from the mounting direction 76a, 76b. Once the latch elements 60a, 60 pass the locking surfaces 62a, 62b they snap back towards the mounting direction 76a, 76b so that the latch elements 60a, 60b abut against the locking surfaces 62a, 62b.

Although non-removable attachment of the connector or connectors 26a, 26b and the handle 16a, 16b to the housing 18a, 18b is possible, it is preferred if the connector or connectors 26a, 26b and the handle 16a, 16b are removably attached to the housing 18a, 18b.

In short, the handle 16a, 16b is secured in the mounting direction 76a, 76b by the connector 26a, 26b, in particular the lock element 54a, 54b and against lateral movement with respect to the mounting direction 76a, 76b primarily or completely by the bearing section 30a, 30b, 34a, 34b of the housing 18a, 18b, in which the tube 22a, 22b is preferably directly fitted. This can be achieved by the bearing section 30a, 30b or bearing section 34a, 34b or both bearing sections 30a, 30, 34a, 34b. The connector 26a, 26b can support the bearing section's 30a, 30b, 34a, 34b reduction of lateral movement with respect to the mounting direction 76a, 76b as described above. This depends on the play of the mounting portion 24a, 24b of the tube 22a, 22b in the bearing sections 30a, 30b, 34a, 34b one the one hand; and the play of the mounting portion 40a, 40b of the connector 26a, 26b in the mounting seat 38a, 38b of the housing 18a, 18b on the other hand. This means that if the mounting portion 24a, 24b has no play in the bearing sections 30a, 30b, 34a, 34b the connector 26a, 26b might not support reduction of lateral movement at all.

As the housing 18a, 18b of the vehicle 10a, 10b comprises two mounting seats and a handle 16a, 16b with a pair of tubes 22a, 22b and a pair of connectors 26a, 26b one tube22a, 22b, one connector 26a, 26b and one mounting seat 38a, 28b are arranged on each side of the vehicle 10a, 10b. This enables a simultaneous removal of the connectors 26a, 26b and the handle 16a, 16b. The tubes 22a, 22b can be held with the thumbs of a hand each and the release button 56a, 56b be pushed with at least one of the remaining fingers.

## Claims

1. Vehicle (10a, 10b), such as wheeled gardening equipment, comprising a handle (16a, 16b) for pushing or pulling the vehicle (10a, 10b), wherein the handle (16a, 16b) comprises at least one tube (22a, 22b) with a mounting portion (24a, 24b), and wherein the vehicle comprises a housing (18a, 18b) with a mounting seat (38a, 38b) to which the mounting portion (24a, 24b) of the tube (22a, 22b) is attached with at least one connector (26a, 26b), wherein the connector (26a, 26b) has a mounting seat (36a, 36b) in which the mounting portion (24a, 24b) of the tube (22a, 22b) is attached and the housing (18a, 18b) has a mounting seat (38a, 38b) in which a mounting portion (40a, 40b) of the connector (26a, 26b) is arranged, **characterised in that** the mounting seat (38a, 38b) of the housing (18a, 18b) is formed as a sliding seat, preferably substantially vertical sliding seat, for the mounting portion (40a, 40b) of the connector (26a, 26b).

2. Vehicle (10a, 10b) according to any of the preceding claims, **characterised in that** the mounting seat (38a, 38b) of the housing (18a, 18b) has at least one opening (42a, 42b) in an external top surface (44a, 44b) of the vehicle (10a, 10b) through which the connector (26a, 26b) is moved into the mounting seat (38a, 38b).

3. Vehicle (10a, 10b) according to any of the preceding claims, **characterised in that** the mounting seat (38a, 38b) of the housing (18a, 18b) has at least one opening (46a, 46b) in an external side surface (48a, 48b) of the vehicle (10a, 10b).

4. Vehicle (10a, 10b) according to claim 2 and/or 3, **characterised in that** an external surface of the connector (26a, 26b) is at least generally flush with a neighbouring external surface (44a, 44b, 48a, 48b) of the housing (18a, 18b) or that an external surface of the connector (26a, 26b) is at least generally flush with a neighbouring external surface of the housing (18a, 18b) except for a bushing section for accommodating the tube.

5. Vehicle (10a, 10b) according claim to 3 or 4, **characterised in that** the mounting portion 24a, 24b) of the tube (22a, 22b) is arranged between the external side surface (48a, 48b) of the vehicle and a locating portion (51a, 51b) of the connector (26a, 26b), wherein the locating portion (51a, 51b) is arranged in a recess portion (52a, 52b) of the housing (18a, 18b).

6. Vehicle (10a, 10b) according to any of the preceding claims, **characterised in that** the connector (26a, 26b) and the handle (16a, 16b) are a preassembled subassembly, wherein the connector (26a, 26b) and the handle (16a, 16b) are preferably removably attached to the housing (18a, 18b).

7. Vehicle (10a, 10b) according to any of the preceding claims, **characterised in that** the tube (22a, 22b) extends at least beyond the mounting seat (36a, 36b) of the connector (26a, 26b) and is attached to at least one further bearing section (30a, 30b, 34a, 34b) of the housing (18a, 18b), wherein the bearing section (30a, 30b, 34a, 34b) is aligned with the mounting seat (36a, 36b), preferably coaxially aligned.

8. Vehicle (10a, 10b) according to any of the preceding claims, **characterised in that** the connector (26a, 26b) comprises a lock element (54a, 54b), preferably on an internal surface (55a; 55b), for securing the connector (26a, 26b) and the handle (16a, 16b) to the housing (18a, 18b), wherein the lock element (54a, 54b) is movable from a locked position locking the connector (26a, 26b) to the housing (18a, 18b) to an unlocked position so that the connector (26a, 26b) and the handle (16a, 16b) can be removed from the housing (18a, 18b) or that the connector (26a, 26b) comprises a lock element (54a, 54b), preferably on an internal surface (55a; 55b), for securing the connector (26a, 26b) and the handle (16a, 16b) to the housing (18a, 18b).

9. Vehicle (10a, 10b) according to claim 8, **characterised in that** the connector (26a, 26b) comprises a lock bearing section (70, 74) for holding the lock element (54a, 54b).

10. Vehicle (10a, 10b) according to claim 8 or 9, **characterised in that** the lock element (54a, 54b) has a button portion (56a, 56b) and the connector (26a, 26b) has an opening (58a, 58b) in its external surface (50a, 50b) for the button portion (56a, 56b), so that the lock element (54a, 54b) can be operated without tools and/or that the lock element (54a, 54b) is spring-loaded towards the locked position.

11. Vehicle (10a, 10b) according to any of claims 8 to 10, **characterised in that** the lock element (54a, 54b) has at least one latch element (60a, 60b) which is movable towards and away from a mounting direction (76a, 76b) of the connector (26a, 26b) and which engages with a corresponding locking surface of the mounting seat (38a, 38b) of the housing (18a, 18b) when in the locked position, wherein the latch element (60a, 60b) preferably has a ramp for pressing the lock element (54a, 54b) towards the unlocked position when the connector (26a, 26b) is inserted into the mounting seat (38a, 38b) of the housing (18a, 18b).

12. Vehicle (10a, 10b) according to any of the preceding claims, **characterised in that** the handle (16a, 16b) is secured in a mounting direction (76a, 76b) by the connector (26a, 26b), in particular a lock element (54a, 54b) and against lateral movement with respect to the mounting direction (76a, 76b) primarily or completely by a bearing section (30a, 30b, 34a, 34b) of the housing (18a, 18b).

13. Vehicle (10a, 10b) according to any of the preceding claims, **characterised in that** the housing (18a, 18b) comprises two mounting seats (38a, 38b) and a handle (16a, 16b) with a pair of tubes (22a, 22b) and a pair of connectors (26a, 26b), that a tube (22a, 22b), a connector (26a, 26b) and a mounting seat (38a, 38b) are arranged on each side of the housing (18a, 18b) and that a simultaneous removal of the connectors (26a, 26b) and the handle (16a, 16b) is enabled, wherein preferably the tubes (22a, 22b) can be held with the thumbs and a release button be pushed with at least one of the remaining fingers.

14. Vehicle (10a, 10b) according to any of the preceding claims, **characterised in that** the mounting seat (36a, 36b) of the connector (26a, 26b) is a bushing.

## Patentansprüche

1. Fahrzeug (10a, 10b), wie eine fahrbare Gartenausrüstung, umfassend einen Griff (16a, 16b) zum Schieben oder Ziehen des Fahrzeugs (10a, 10b), wobei der Griff (16a, 16b) mindestens ein Rohr (22a, 22b) mit einem Befestigungsabschnitt (24a, 24b) umfasst und wobei das Fahrzeug ein Gehäuse (18a, 18b) mit einem Befestigungssitz (38a, 38b) umfasst, an dem der Befestigungsabschnitt (24a, 24b) des Rohrs (22a, 22b) mit mindestens einem Verbinder (26a, 26b) befestigt ist, wobei der Verbinder (26a, 26b) einen Montagesitz (36a, 36b) aufweist, in dem der Befestigungsabschnitt (24a, 24b) des Rohrs (22a, 22b) befestigt ist, und das Gehäuse (18a, 18b) einen Montagesitz (38a, 38b) aufweist, in dem ein Befestigungsabschnitt (40a, 40b) des Verbinders (26a, 26b) angeordnet ist, **dadurch gekennzeichnet, dass** der Montagesitz (38a, 38b) des Gehäuses (18a, 18b) als Schiebesitz, vorzugsweise im Wesentlichen als vertikaler Schiebesitz, für den Befestigungsabschnitt (40a, 40b) des Verbinders (26a, 26b) ausgebildet ist.

2. Fahrzeug (10a, 10b) nach einem der vorhergehenden Ansprüche, **dadurch gekennzeichnet, dass** der Montagesitz (38a, 38b) des Gehäuses (18a, 18b) mindestens eine Öffnung (42a, 42b) in einer äußeren oberen Oberfläche (44a, 44b) des Fahrzeugs (10a, 10b) aufweist, durch die der Verbinder (26a, 26b) in den Montagesitz (38a, 38b) bewegt wird.

3. Fahrzeug (10a, 10b) nach einem der vorhergehenden Ansprüche, **dadurch gekennzeichnet, dass** der Montagesitz (38a, 38b) des Gehäuses (18a, 18b) mindestens eine Öffnung (46a, 46b) in einer äußeren Seitenoberfläche (48a, 48b) des Fahrzeugs (10a, 10b) aufweist.

4. Fahrzeug (10a, 10b) nach Anspruch 2 und/oder 3, **dadurch gekennzeichnet, dass** eine Außenoberfläche des Verbinders (26a, 26b) mindestens im Allgemeinen bündig mit einer benachbarten Außenoberfläche (44a, 44b, 48a, 48b) des Gehäuses (18a, 18b) liegt oder dass eine Außenoberfläche des Verbinders (26a, 26b) mindestens im Allgemeinen bündig mit einer benachbarten Außenoberfläche des Gehäuses (18a, 18b) liegt, mit Ausnahme eines Buchsenabschnitts zum Aufnehmen des Rohrs.

5. Fahrzeug (10a, 10b) nach Anspruch 3 oder 4, **dadurch gekennzeichnet, dass** der Befestigungsabschnitt (24a, 24b) des Rohrs (22a, 22b) zwischen der äußeren Seitenoberfläche (48a, 48b) des Fahrzeugs und einem Positionierungsabschnitt (51a, 51b) des Verbinders (26a, 26b) angeordnet ist, wobei der Positionierungsabschnitt (51a, 51b) in einem Aussparungsabschnitt (52a, 52b) des Gehäuses (18a, 18b) angeordnet ist.

6. Fahrzeug (10a, 10b) nach einem der vorhergehenden Ansprüche, **dadurch gekennzeichnet, dass** der Verbinder (26a, 26b) und der Griff (16a, 16b) eine vormontierte Unterbaugruppe sind, wobei der Verbinder (26a, 26b) und der Griff (16a, 26b), 16b) vorzugsweise lösbar an dem Gehäuse (18a, 18b) befestigt sind.

7. Fahrzeug (10a, 10b) nach einem der vorhergehenden Ansprüche, **dadurch gekennzeichnet, dass** sich das Rohr (22a, 22b) mindestens über den Montagesitz (36a, 36b) des Verbinders (26a, 26b) hinaus erstreckt und mindestens an einen weiteren Buchsenabschnitt (30a, 30b, 34a, 34b) des Gehäuses (18a, 18b) befestigt ist, wobei der Buchsenabschnitt (30a, 30b, 34a, 34b) mit dem Montagesitz (36a, 36b) ausgerichtet, vorzugsweise koaxial ausgerichtet ist.

8. Fahrzeug (10a, 10b) nach einem der vorhergehenden Ansprüche, **dadurch gekennzeichnet, dass** der Verbinder (26a, 26b) ein Verriegelungselement (54a, 54b), vorzugsweise an einer Innenoberfläche (55a; 55b), zum Befestigen des Verbinders (26a, 26b) und des Griffs (16a, 16b) an dem Gehäuse (18a, 18b) umfasst, wobei das Verriegelungselement (54a, 54b) aus einer verriegelten Position, in der der Verbinder (26a, 26b) mit dem Gehäuse (18a, 18b) verriegelt ist, in eine entriegelte Position beweglich ist, sodass der Verbinder (26a, 26b) und der Griff (16a, 16b) aus dem Gehäuse (18a, 18b) entfernt werden können, oder dass der Verbinder (26a, 26b) ein Verriegelungselement (54a, 54b), vorzugsweise an einer Innenoberfläche (55a; 55b), zum Befestigen des Verbinders (26a, 26b) und des Handgriffs (16a, 16b) an dem Gehäuse (18a, 18b) umfasst.

9. Fahrzeug (10a, 10b) nach Anspruch 8, **dadurch gekennzeichnet, dass** der Verbinder (26a, 26b) einen Verriegelungsbuchsenabschnitt (70, 74) zum Halten des Verriegelungselements (54a, 54b) umfasst.

10. Fahrzeug (10a, 10b) nach Anspruch 8 oder 9, **dadurch gekennzeichnet, dass** das Verriegelungselement (54a, 54b) einen Knopfabschnitt (56a, 56b) aufweist und der Verbinder (26a, 26b) eine Öffnung (58a, 58b) in seiner Außenoberfläche (50a, 50b) für den Knopfabschnitt (56a, 56b) aufweist, sodass das Verriegelungselement (54a, 54b) ohne Werkzeug betätigt werden kann und/oder dass das Verriegelungselement (54a, 54b) in die verriegelte Position federbelastet ist.

11. Fahrzeug (10a, 10b) nach einem der Ansprüche 8 bis 10, **dadurch gekennzeichnet, dass** das Verriegelungselement (54a, 54b) mindestens ein Rastelement (60a, 60b) aufweist, das in eine und aus einer Befestigungsrichtung (76a, 76b) des Verbinders (26a, 26b) beweglich ist und das in der verriegelten Position in eine entsprechende Verriegelungsoberfläche des Montagesitzes (38a, 38b) des Gehäuses (18a, 18b) eingreift, wobei das Verriegelungselement (60a, 60b) vorzugsweise eine Rampe aufweist, um das Verriegelungselement (54a, 54b) in die entriegelte Position zu pressen, wenn der Verbinder (26a, 26b) in den Montagesitz (38a, 38b) des Gehäuses (18a, 18b) eingeführt wird.

12. Fahrzeug (10a, 10b) nach einem der vorhergehenden Ansprüche, **dadurch gekennzeichnet, dass** der Griff (16a, 16b) in einer Montagerichtung (76a, 76b) durch den Verbinder (26a, 26b), insbesondere ein Verriegelungselement (54a, 54b) und gegen eine seitliche Bewegung in Bezug auf die Montagerichtung (76a, 76b) hauptsächlich oder vollständig durch einen Buchsenabschnitt (30a, 30b, 34a, 34b) des Gehäuses (18a, 18b) befestigt ist.

13. Fahrzeug (10a, 10b) nach einem der vorhergehenden Ansprüche, **dadurch gekennzeichnet, dass** das Gehäuse (18a, 18b) zwei Montagesitze (38a, 38b) und einen Griff (16a, 16b) mit einem Paar von Rohren (22a, 22b) und einem Paar von Verbindern (26a, 26b) umfasst, dass ein Rohr (22a, 22b), ein Verbinder (26a, 26b) und ein Montagesitz (38a, 38b) auf jeder Seite des Gehäuses (18a, 18b) angeordnet sind und dass ein gleichzeitiges Entfernen der Verbinder (26a, 26b) und des Griffs (16a, 16b) ermöglicht wird, wobei vorzugsweise die Rohre (22a, 22b) mit den Daumen gehalten werden können und ein Freigabeknopf mit mindestens einem der restlichen Finger gedrückt werden kann.

14. Fahrzeug (10a, 10b) nach einem der vorhergehenden Ansprüche, **dadurch gekennzeichnet, dass** der Montagesitz (36a, 36b) des Verbinders (26a, 26b) eine Buchse ist.

## Revendications

1. Véhicule (10a, 10b) tel qu'un équipement de jardinage sur roues, comprenant une poignée (16a, 16b) pour pousser ou tirer le véhicule (10a, 10b), la poignée (16a, 16b) comprenant au moins un tube (22a, 22b) avec une portion de montage (24a, 24b), et le véhicule comprenant un boîtier (18a, 18b) avec un siège de montage (38a, 38b) auquel est attachée la portion de montage (24a, 24b) du tube (22a, 22b), avec au moins un connecteur (26a, 26b), le connecteur (26a, 26b) présentant un siège de montage (36a, 36b) dans lequel la portion de montage (24a, 24b) du tube (22a, 22b) est attachée et le boîtier (18a, 18b) présentant un siège de montage (38a, 38b) dans lequel une portion de montage (40a, 40b) du connecteur (26a, 26b) est disposée, **caractérisé en ce que** le siège de montage (38a, 38b) du boîtier (18a, 18b) est formé en tant que siège coulissant, de préférence en tant que siège coulissant sensiblement verticalement, pour la portion de montage (40a, 40b) du connecteur (26a, 26b).

2. Véhicule (10a, 10b) selon l'une quelconque des revendications précédentes, **caractérisé en ce que** le siège de montage (38a, 38b) du boîtier (18a, 18b) présente au moins une ouverture (42a, 42b) dans une surface supérieure extérieure (44a, 44b) du véhicule (10a, 10b) à travers laquelle le connecteur (26a, 26b) est déplacé dans le siège de montage (38a, 38b).

3. Véhicule (10a, 10b) selon l'une quelconque des revendications précédentes, **caractérisé en ce que** le siège de montage (38a, 38b) du boîtier (18a, 18b) présente au moins une ouverture (46a, 46b) dans une surface latérale extérieure (48a, 48b) du véhicule (10a, 10b).

4. Véhicule (10a, 10b) selon la revendication 2 et/ou 3, **caractérisé en ce qu'**une surface extérieure du connecteur (26a, 26b) est au moins généralement en affleurement avec une surface extérieure adjacente (44a, 44b, 48a, 48b) du boîtier (18a, 18b) ou **en ce qu'**une surface extérieure du connecteur (26a, 26b) est au moins généralement en affleurement avec une surface extérieure adjacente du boîtier (18a, 18b) à l'exception d'une section de douille pour recevoir le tube.

5. Véhicule (10a, 10b) selon la revendication 3 ou 4, **caractérisé en ce que** la portion de montage (24a, 24b) du tube (22a, 22b) est disposée entre la surface latérale extérieure (48a, 48b) du véhicule et une portion de positionnement (51a, 51b) du connecteur (26a, 26b), la portion de positionnement (51a, 51b) étant disposée dans une portion en retrait (52a, 52b) du boîtier (18a, 18b).

6. Véhicule (10a, 10b) selon l'une quelconque des revendications précédentes, **caractérisé en ce que** le connecteur (26a, 26b) et la poignée (16a, 16b) constituent un sous-ensemble pré-assemblé, le connecteur (26a, 26b) et la poignée (16a, 16b) étant de préférence attachés de manière amovible au boîtier (18a, 18b).

7. Véhicule (10a, 10b) selon l'une quelconque des revendications précédentes, **caractérisé en ce que** le tube (22a, 22b) s'étend au moins au-delà du siège de montage (36a, 36b) du connecteur (26a, 26b) et est attaché à au moins une section de palier supplémentaire (30a, 30b, 34a, 34b) du boîtier (18a, 18b), la section de palier (30a, 30b, 34a, 43b) étant alignée avec le siège de montage (36a, 36b), de préférence étant alignée coaxialement.

8. Véhicule (10a, 10b) selon l'une quelconque des revendications précédentes, **caractérisé en ce que** le connecteur (26a, 26b) comprend un élément de verrouillage (54a, 54b), de préférence sur une surface interne (55a ; 55b), pour fixer le connecteur (26a, 26b) et la poignée (16a, 16b) au boîtier (18a, 18b), l'élément de verrouillage (54a, 54b) étant déplaçable d'une position verrouillée verrouillant le connecteur (26a, 26b) au boîtier (18a, 18b) dans une position déverrouillée de telle sorte que le connecteur (26a, 26b) et la poignée (16a, 16b) puissent être enlevés du boîtier (18a, 18b) ou **en ce que** le connecteur (26a, 26b) comprend un élément de verrouillage (54a, 54b), de préférence sur une surface interne (55a ; 55b), afin de fixer le connecteur (26a, 26b) et la poignée (16a, 16b) au boîtier (18a, 18b).

9. Véhicule (10a, 10b) selon la revendication 8, **caractérisé en ce que** le connecteur (26a, 26b) comprend une section de palier de verrouillage (70, 74) pour retenir l'élément de verrouillage (54a, 54b).

10. Véhicule (10a, 10b) selon la revendication 8 ou 9, **caractérisé en ce que** l'élément de verrouillage (54a, 54b) présente une portion de bouton (56a, 56b) et le connecteur (26a, 26b) présente une ouverture (58a, 58b) dans sa surface extérieure (50a, 50b) pour la portion de bouton (56a, 56b), de telle sorte que l'élément de verrouillage (54a, 54b) puisse être actionné sans outils et/ou **en ce que** l'élément de verrouillage (54a, 54b) est sollicité par ressort vers la position verrouillée.

11. Véhicule (10a, 10b) selon l'une quelconque des revendications 8 à 10, **caractérisé en ce que** l'élément de verrouillage (54a, 54b) présente au moins un élément d'enclenchement (60a, 60b) qui peut être déplacé vers une direction de montage (76a, 76b) du connecteur (26a, 26b) et à l'écart de celle-ci, et qui s'engage avec une surface de verrouillage correspondante du siège de montage (38a, 38b) du boîtier (18a, 18b) dans la position verrouillée, l'élément d'enclenchement (60a, 60b) présentant de préférence une rampe pour presser l'élément de verrouillage (54a, 54b) vers la position déverrouillée lorsque le connecteur (26a, 26b) est inséré dans le siège de montage (38a, 38b) du boîtier (18a, 18b).

12. Véhicule (10a, 10b) selon l'une quelconque des revendications précédentes, **caractérisé en ce que** la poignée (16a, 16b) est fixée dans une direction de montage (76a, 76b) par le connecteur (26a, 26b), en particulier un élément de verrouillage (54a, 54b) et contre tout mouvement latéral par rapport à la direction de montage (76a, 76b) principalement ou complètement par une section de palier (30a, 30b, 34a, 34b) du boîtier (18a, 18b).

13. Véhicule (10a, 10b) selon l'une quelconque des revendications précédentes, **caractérisé en ce que** le boîtier (18a, 18b) comprend deux sièges de montage (38a, 38b) et une poignée (16a, 16b) avec une paire de tubes (22a, 22b) et une paire de connecteurs (26a, 26b), **en ce qu'**un tube (22a, 22b), un connecteur (26a, 26b) et un siège de montage (38a, 38b) sont disposés de chaque côté du boîtier (18a, 18b) et **en ce qu'**un retrait simultané des connecteurs (26a, 26b) et de la poignée (16a, 16b) est possible, les tubes (22a, 22b) pouvant de préférence être retenus avec les pouces et un bouton de libération pouvant être poussé avec au moins l'un des autres doigts.

14. Véhicule (10a, 10b) selon l'une quelconque des revendications précédentes, **caractérisé en ce que** le siège de montage (36a, 36b) du connecteur (26a, 26b) est une douille.
